# EUROPEAN PATENT SPECIFICATION

(11) **EP 2 572 933 B1**
(45) Date of publication and mention of the grant of the patent: **28.08.2013**
(21) Application number: 11386015.9
(22) Date of filing: 21.09.2011
(51) Int. Cl.: B60Q 1/26, B60R 1/12, B60R 1/04

(54) **Mirror-type taximeter support system**
Haltesystem für Spiegeltaximeter
Système de support de compteur de taxi de type miroir

(43) Date of publication of application: 27.03.2013
(73) Proprietor: Semitron S.A. - Electronic Electrical Construction Societe Anonyme, 57022 Thessaloniki (GR)
(72) Inventor: Vamvatira, Evangelia, 55236 Panorama Thessaloniki (GR); Vamvatiras, Dimitrios, 55236 Panorama Thessaloniki (GR)
(74) Representative: Panagiotidou, Effimia

(56) References cited:
- DE-U1- 20 217 197
- US-A1- 2005 270 620
- US-A1- 2007 188 844
- US-A1- 2010 277 821

## Description

The invention is classified as a mechanical invention and pertains to a digital taximeter support system that also serves as a mirror.

According to the current state of the art, there are electronic taximeters that do not function as standalone devices, but are incorporated in the mirror mounted on the inner side of the windshield or the car roof. These taximeters, which we commonly called "mirror-type taximeters", face the technical challenge of secure attachment to the existing ex factory mirror base featured in the vehicles, either on the inner side of the windshield or the inner side of the vehicle's roof.

One side of this ex factory mirror support base is mounted on the inner side of the vehicle, either on the windshield or the roof, and on the other side it features a spherical end that is inserted in the corresponding spherical gap available in the back of a simple mirror, thereby creating a joint. Usually this spherical end on the ex factory mirror support base bears a through hole used to carry electrical wires to power any lighting function of the mirror.

The way the mirror-taximeter is currently mounted on the vehicle using the above ex factory mirror support base, with a through hole, is usually done using cable ties (cleats), either with nipper clamps, onto the existing simple mirror.

The disadvantage of this method of support is that it leads to the tasteless solution of placing onto the existing mirror, which is not a taximeter, a second mirror, which is a taximeter also. Furthermore, nipper clamps run the risk of becoming loose during driving bumps and letting the mirror-taximeter fall from place.

There is also the mounting of the taximeter-mirror described in DE 20217197 U1, but this refers to a new type of base. This means that it may not be used on the mirror's ex factory support system that all vehicles now feature, but it requires replacement of the base mounted by the vehicle manufacturer, either on the windshield or on the vehicle's inner roof.

Document US2005/0270620 discloses a mirror-display support system comprising a front section with an integrated display, a rear section connected to the front one, and an adaptor with a spherical recess where the adaptor is fixed between the front and rear section creating thereby and with the display one comprehensive system.

The technical problem that this invention solves is that it replaces the existing simple mirror with a mirror type taximeter, without requiring to change the existing support base of the simple mirror that all vehicles already feature ex factory, but it secures the mirror taximeter onto this base, indeed in a safe and tasteful way.

The above problem is solved with the features of claim 1.

Specifically, this invention is a mirror taximeter support system, featuring on one side a spherical ball socket for connection to the ex factory base that vehicles have today to support a simple mirror and on the other side featuring a component connecting to the mirror taximeter.

That is, the invention is inserted between the mirror taximeter and the existing ex factory base mounted to the vehicle and connecting these two components. Its advantage is that to install it, the already existing support system of the mirror, either on the windshield or on the inner side of the car's roof, is used. For this reason, it may be installed in almost all car types.

A further advantage of this invention is that it may be installed on and off easily and therefore the user can remove the mirror-taximeter and mount again the inner ex factory mirror on the existing support base, in case the car is intended for private use, or if the taximeter must be sent for repair.

The five Drawings that come with this description show the following: Drawing 1 illustrates the mirror-taximeter support system disassembled, in its full version, before deciding whether to install the mirror-taximeter on an ex factory base mounted by the vehicle's manufacturer on the inner side of the car's windshield, or on an ex factory base mounted by the vehicle's manufacturer on the inner side of the car's roof, or on either of the above places at a 45-degree angle. After selecting the installation inclination, any detachable parts of the system shall be also removed.

Drawing 2 illustrates the mirror-taximeter support system disassembled, with its respective removable parts of the system removed, so that the mirror-taximeter may be installed on an ex factory base mounted by the vehicle's manufacturer on the inner side of the car's windshield.

Drawing 3 illustrates the mirror-taximeter support system disassembled, with its respective removable parts of the system removed, so that the mirror taximeter may be installed on an ex factory base mounted by the vehicle's manufacturer on the inner side of the car's roof.

Drawing 4 illustrates the mirror-taximeter support system disassembled, with its respective removable parts of the system removed, so that the mirror-taximeter may be installed on an ex factory base mounted by the vehicle's manufacturer either on the inner side of the car's windshield or on the inner side of the car's roof, but in both cases at an 45-degree angle.

Drawing 5 illustrates the adaptor that the mirror-taximeter support system features in front (figure 1) and side view (figure 2) and the inside of the taximeter-mirror support system back section (figure 3).

Further, as illustrated in Drawings 1-5, the mirror-taximeter support system, secures the mirror-taximeter to the ex factory support base of the simple mirror, inserted in between.

It consists of three components: the front (1) section, the back (3) section and the adaptor (2).

The front (1) section bears on top a part that may be detached, thus creating a semicircular recess (8). Inside it bears a pair of slots (9) (drawings 1 -4). At the bottom it bears a groove (12) used as a cable outlet.

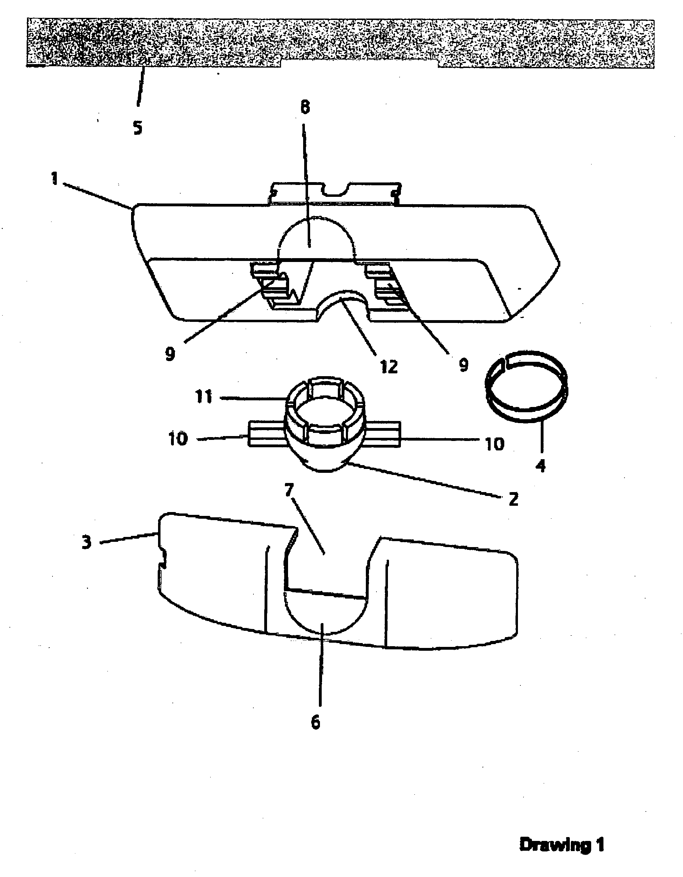

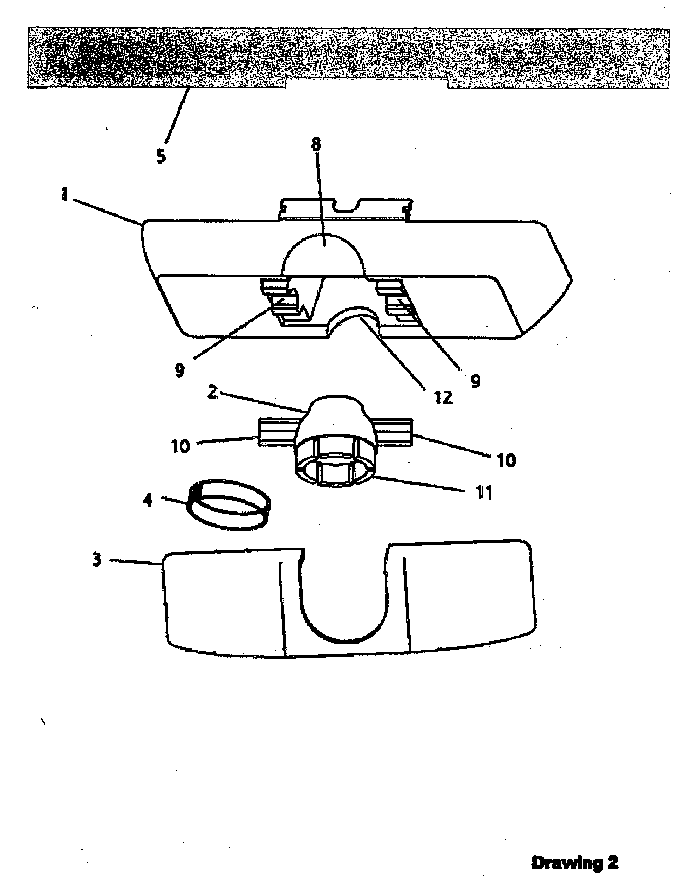

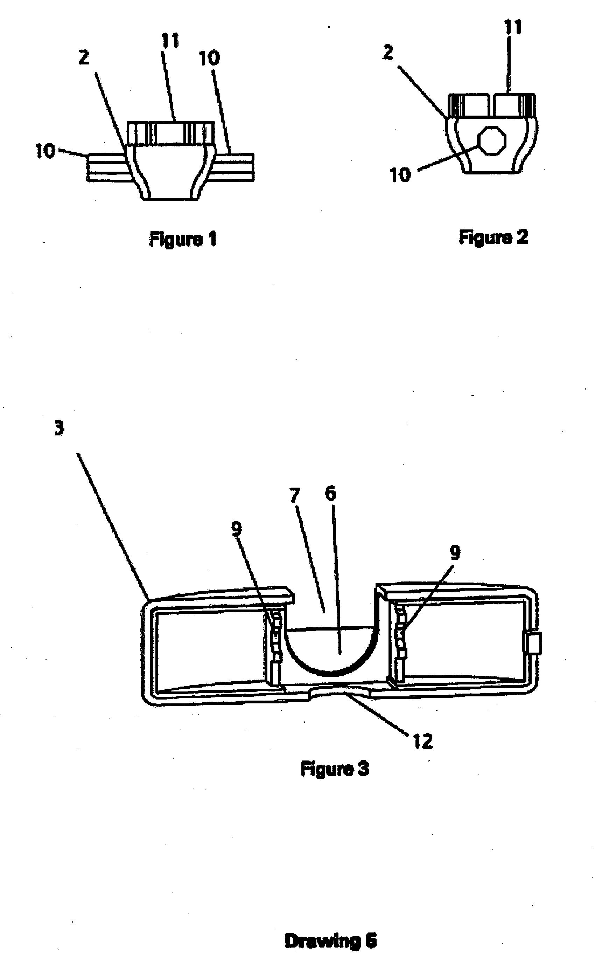

The adaptor (2), features a spherical cavity on the inside, of equal size to the spherical end attached on the ex factory mirror support base that vehicles feature from their manufacturer. The adaptor (2) has horizontal polyhedral protrusions (10) on the outer side at diametrically opposite points on its periphery (drawings 1-4, drawing 5 figures 1 & 2). In its upper section, at the end of the spherical cavity, it has notches (11). Around the notches (11) a hole stopper is mounted (4).

The back (3) section bears in the middle a shaped recess (7) and an item (6), which may be detached as desired, depending on whether the system is to be installed on the ex factory support base located
- at the inner side of the car's windshield, so the detachable item (6) is removed (drawing 2), or
- at the inner side of the car's roof, so only the detachable item (8) of the front (1) section is removed (drawing 3), or
- at the inner side of the windshield or the roof but with a 45-degree inclination, so both detachable items (6 and 8) are removed (drawing 4).

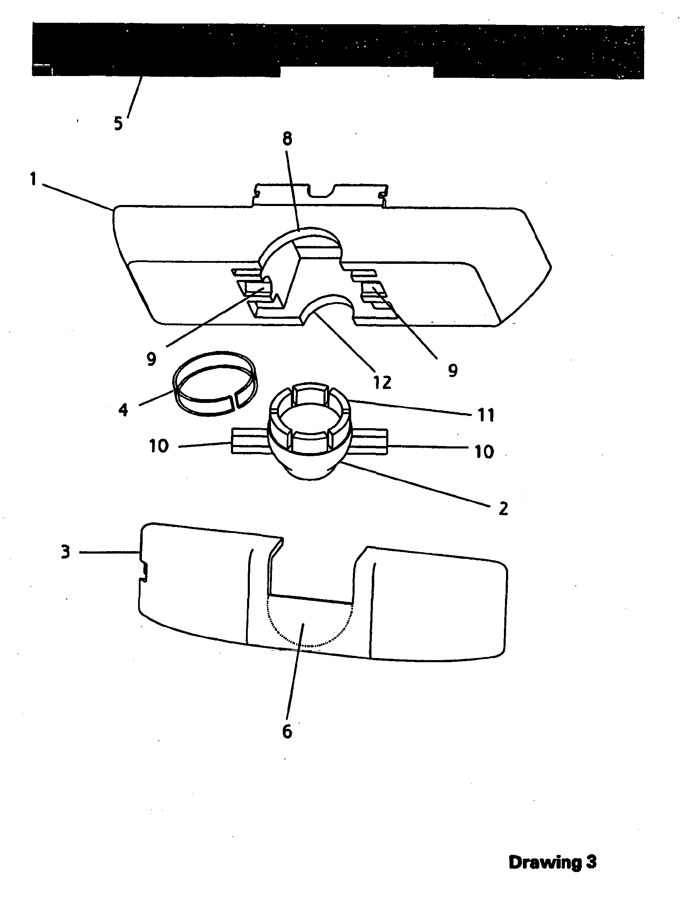

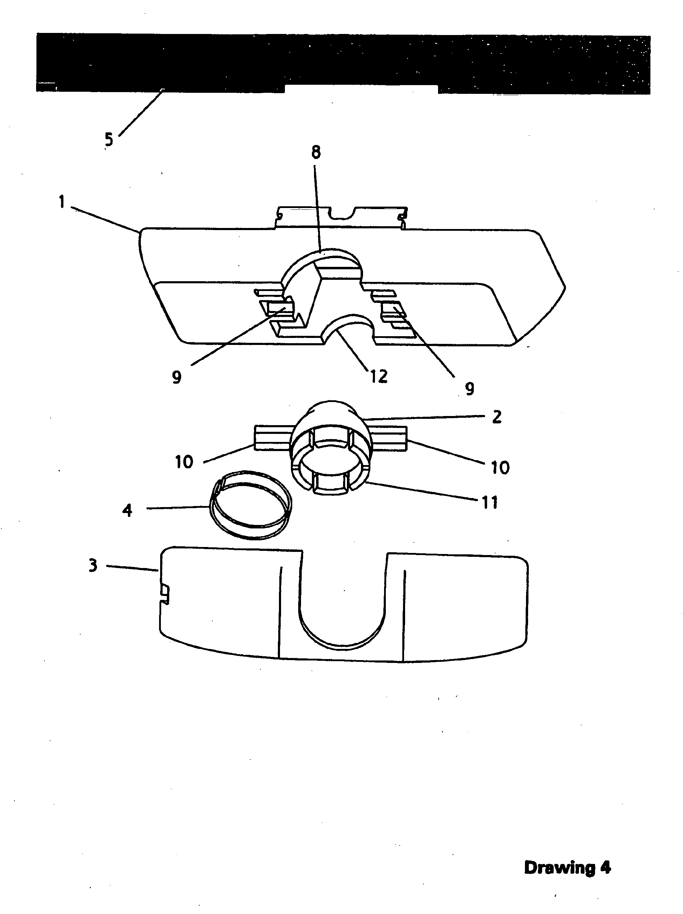

The back section (3) features also on the inside suitably shaped recesses (9), identical with the corresponding recesses (9) it features at the front section (1) (drawing 5, figure 3).
At the bottom section it bearings a groove (12) used as a cable outlet, similar to the groove (12) it bears in the front section (1).

In particular, when the mirror taximeter is to be mounted on an ex factory base placed by the vehicle manufacturer within the vehicle's roof (drawing 3), to mount the support system the detachable item (8) is removed from the front (1) section located thereon. Thereafter, the adaptor (2) by means of the inner spherical cavity it features and by using its notches (11) it is inserted and secured onto the respective spherical end on the edge of the ex factory support base of the mirror, thus creating thereby a joint. The removable hole stopper (4) tightens around the notches (11) preventing the adaptor (2) from detaching from the ex factory support base of the mirror and thereby ensuring the optimal functioning of the joint formed by the two components.

The two sections (1 and 3) feature shaped pairs of recesses (9) in their inner part where the adaptor's (2) horizontal polyhedral protrusions (10) are inserted and stopped (drawings 1-5). Thereafter, the rear section (3) is connected to the front section (1), having the adaptor (2) in between, with its protrusions (10) positioned as male-female connector into the corresponding recesses (9) of the two sections (1 and 3). The recess formed by removing the detachable item (8) of the front (1) section, and the recess (7) on the rear (3) section are jointed forming an opening (drawing 3). The adaptor is mounted vertically, i.e. with the notch-ring (11) facing the opening (8 and 7, drawing 3).
Then the two sections (1 and 3) are bolted and fastened one above the other and this way the adaptor (2) is also stopped inside them. Therefore, the three sections of the system, i.e. the front (1) section, the rear (3) section and the adaptor (2) are inextricably jointed and form a single compact system. Also, the recess (7) on the rear (3) section is connected to the corresponding recess formed by removing the detachable item (8) of the front section (1), forming an opening, which allows the entire support system to move around the spherical end of the mirror's ex factory support base. This way, the system is mounted around the spherical end featured on the ex factory support base of the vehicle's mirror, and then the front section (1) is secured on the mirror-taximeter (5) thus forming a single component. The joint connection formed by the adaptor (2) with the spherical end of the ex factory support base attached to the vehicle, allows the mirror-taximeter (5) to move and to be adjusted in the direction desired by the user.
The front (1) section, by removing the detachable item (8) bears on top of it a recess formation (drawing 1, figure 1) which is proposed to be semicircular as shown (drawings 3 and 4) but it may also have any other shape, such as a square, rectangular, etc. recess, provided that it is placed face to face with the recess (7) on the rear (3) section.

Alternatively, when the mirror-taximeter is to be mounted on an ex factory support base fitted by the vehicle manufacturer on the car's inner windshield (drawing 2), the system is not supported by its top section at the point where the two sections (1 and 3) meet, but at the opening formed in the back of the rear section (3) (drawing 2).
Specifically, to install the support system on the windshield, the detachable item (6) is removed from the rear (3) section, creating thereby an opening in the back of the rear section (3).
In this mounting option, the detachable item (8) located at the top of the front (1) section need not be removed.
Again, to install the system, the adaptor (2) with its inner spherical cavity and with the help of the recesses (11) is inserted and secured on the corresponding spherical end featured at the edge of the ex factory support base of the mirror, thereby creating a joint. The hole stopper (4), tightens around the notches (11) ensuring the optimal functioning of the joint formed by the ex factory support base of the mirror with the adaptor (2).
Thereafter, the two sections, the front (1) and back (3) one, are positioned around the adaptor (2) and connected to one another, having the adaptor (2) in between, with its polyhedral protrusions (10) as male-female connector into the corresponding recesses (9) of the two sections (1 and 3). The adaptor (2) is now positioned horizontally, i.e. with its notches (11) facing the opening (6 and 7) of the rear (3) section. The two sections (1 and 3) are bolted and fastened one above the other and this way the adaptor (2) is also stopped inside them.
This way the three sections of the system, i.e. the front (1) section, the rear (3) section and the adaptor (2) are again inextricably jointed and form a single compact system, moving wholly around the joint formed by the spherical end featured on the ex factory support base of the vehicle's mirror at the inner part of the car's windshield. Then the front section (1) is secured on the mirror-taximeter (5) forming a single component therewith. The connection joints allows the mirror (5) taximeter in the direction desired by the user.

Finally, the system can be mounted at the inner side of the windshield or the inner side of the roof, having a 45-degree (drawing 4) inclination. For this kind of mounting, the mounting way of the system on the inner side of the car's windshield that we just described, is strictly followed except that the adaptor (2) is fitted with its polyhedral protrusions (10) as male-female connector into the corresponding recesses (9) of both sections (1 and 3), in such a position so that the recesses (11) form a 45-degree inclination compared to the vehicle'a roof.
In this installation way, the detachable item (8) located on the top of the front (1) section is also cut out.

The support system for the mirror-taximeter can be installed in all vehicles using a mirror with built-in taximeters, in the existing ex factory support base for a simple mirror fitted by their manufacturer, located either on the inner side of the windshield (drawing 1), or located at the inner side of the vehicle's roof (drawing 2).

## Claims

1. A mirror-taximeter support system, comprising:
i) a front (1) section comprising a mirror-taximeter (5)
ii) a rear section (3) connected to the front section (1), which rear section (3) bears a formed recess (7) in the middle and a detachable item (6),
wherein said sections (1,3) comprise shaped recesses (9) to support polyhedral protrusions (10) of an adaptor (2) and
iii) an adaptor (2) with a spherical cavity to be mounted to the spherical end of a mirror support base, where the adaptor (2) is fixed between the front (1) and rear (3) section creating thereby and with the mirror-taximeter one comprehensive system, and while the adaptor's spherical cavity bears, on its outside, said horizontal polyhedral protrusions (10) at diametrically opposite points on its periphery, while at its upper section, at the spherical cavity end, the adaptor (2) has notches (11), which are clamped by a hole stopper (4) placed around them.

2. A support system according to claim 1, **characterized by** the fact that the front (1) section bears in the middle a detachable item (8).

3. A support system according to claims 1 to 2, **characterized by** the fact the front (1) section and the rear one (3), bear recesses (9) to support the polyhedral protrusions (10) of the adaptor (2).

4. A support system according to claims 1 to 3, **characterized by** the fact that the front (1) section and the rear one (3) bear a similar recess (12) at the bottom as cable outlet.

## Patentansprüche

1. Ein Spiegel-Taxameter - Trägersystem bestehend aus:
i) einem Vorderteil (1), das das Spiegel-Taxameter (5) umfasst,
ii) einem Rückteil (3), das mit dem Vorderteil (1) verbunden ist und in der Mitte eine Versenkung (7) mit einem herausnehmbaren Element (6) besitzt, wobei die Teile (1, 3) geformte Vertiefungen (9) aufweisen, die als Basis für die polyedrischen Ausbuchtungen (10) eines Adapters (2) dienen, und
iii) einem Adapter (2) mit einer kugelförmigen Aushöhlung, der auf die kugelförmige Trägerbasis des Rückspiegels montiert wird, wobei der Adapter (2) zwischen dem Vorderteil (1) und dem Rückteil (3) befestigt wird und somit zusammen mit dem Spiegel-Taxameter ein einziges integriertes System bildet, und wobei die kugelförmige Aushöhlung des Adapters auf ihrer Außenseite besagte polyedrische Ausbuchtungen (10) an den diametral gegenüberliegenden Enden seiner Peripherie aufweist, während der Adapter (2) im oberen Abschnitt seiner kugelförmigen Aushöhlung Kerben (11) besitzt, die durch einen um diese herum platzierten Stopper (4) verschlossen sind.

2. Einem Trägersystem, gemäß Patentanspruch 1, das **dadurch gekennzeichnet ist, dass** das Vorderteil (1) in der Mitte ein herausnehmbares Element (8) besitzt.

3. Einem Trägersystem, gemäß den Patentansprüchen 1 und 2, das **dadurch gekennzeichnet ist, dass** das Vorderteil (1) und das Rückteil (3) Vertiefungen besitzen, die als Basis für die polyedrischen Ausbuchtungen (10) des Adapters (2) dienen.

4. Einem Trägersystem, gemäß den Patentansprüche 1 bis 3, das **dadurch gekennzeichnet ist, dass** das Vorderteil (1) und das Rückteil (3) an der Unterseite eine ähnliche Vertiefung (12) für den Kabelausgang besitzen.

## Revendications

1. Un système de soutien de miroir-taximètre, qui comprend:
i) une partie avant (1) qui comprend un miroir-taximètre (5)
ii) une partie arrière (3) connectée à la partie avant (1), cette partie arrière (3) porte une ouverture formée (7) au milieu et une pièce amovible (6), où ces parties (1,3) comprennent des ouvertures façonnées (9) afin de soutenir des protrusions polyédriques (10) d'un adaptateur (2) et
iii) un adaptateur (2) avec une cavité sphérique pour installation sur l'extrémité sphérique d'une base de soutien de miroir, où l'adaptateur (2) est fixé entre la partie avant (1) et arrière (3), ainsi en formant avec le miroir-taximètre un système global, et pendant que la cavité sphérique de l'adaptateur porte sur la face extérieure des protrusions polyédriques horizontales (10) aux points opposés diamétralement sur sa périphérie, tandis que à la partie supérieure, sur l'extrémité de la cavité sphérique, l'adaptateur (2) a des encoches (11) qui sont serrées par une quenouille de trou (4) placée autour d'elles.

2. Un système de soutien selon la revendication 1, **caractérisé par le fait que** la partie avant (1) porte au milieu une pièce amovible (8).

3. Un système de soutien selon les revendications 1 jusqu'à 2, **caractérisé par le fait que** la partie avant (1) et arrière (3), portent des ouvertures (9) afin de soutenir les protrusions polyédriques (10) de l'adaptateur (2).

4. Un système de soutien selon les revendications 1 jusqu'à 3, **caractérisé par le fait que** la partie avant (1) et arrière (3) portent une ouverture similaire (12) au fond comme une sortie de câble.
